# EUROPEAN PATENT APPLICATION

(11) **EP 1 688 732 A2**
(43) Date of publication of application: **09.08.2006**
(21) Application number: 06002564.0
(22) Date of filing: 08.02.2006
(51) Int. Cl.: G01N 15/14, C12M 1/34

(54) **Cell sorter chip having gel electrodes**

(30) Priority: 08.02.2005 JP 2005031348
(71) Applicant: Japan Science and Technology Agency, Kawaguchi City Saitama 332-0012 (JP)
(72) Inventor: Yasuda, Kenji, 1-10-1 Yuraku-cho Chiyoda-ku Tokyo (JP); Hattori, Akihiro, 1-10-1 Yuraku-cho Chiyoda-ku Tokyo (JP); Okano, Kazunori, 1-10-1 Yuraku-cho Chiyoda-ku Tokyo (JP)
(74) Representative: Strehl Schübel-Hopf & Partner

(57) **Abstract**

A cell sorting chip and a cell sorting technology are to be established which can positively detect and sort a specified cell for cell separation and detection using micro flow paths formed on a substrate, whereby a cell analyzing/sorting device is provided which uses an inexpensive disposable chip replaceable for each sample. To this end, micro flow paths formed on the substrate are formed, and cells are roughly sorted in a first stage and then finely sorted in a second stage. More specifically, cells are sorted roughly by using scattered light or according to intensity of luminescence in the first stage. In the second stage, the roughly sorted cells are sorted with high precision using image recognition.

## Description

### FIELD OF THE INVENTION

The present invention relates to a cell sorter configured on a substrate.

### BACKGROUND OF THE INVENTION

An anatomy of a multicellular organism retains a harmonious function as a whole by each cell taking a different complementary role. Once a part of the multicellular organism becomes cancerous (hereinafter referred to as a cancer, including a tumor), the cells in the part grow into neoplasm different from its peripheral region. However, the cancerous region and a normal tissue region away therefrom may not necessarily be distinguished by a certain borderline and the region surrounding the cancer is affected in some way. Therefore, in order to analyze a function of an organ tissue, it is necessary to pick up a small number of cells present in a small region.

Otherwise, in the medical field, in order to examine a region suspected of cancer in the normal tissue, it is necessary to sort the region suspected of cancer from a piece of tissue acquired by biopsy. For separation and collection of such specific cells, it is common to fix the cells, perform various cell stainings, and cut out a target part. Recently for this purpose, a method called laser microdissection to get cells only from a target region subjected to the laser has been developed.

Otherwise, in the field of regeneration medicine, there is an endeavor to separate and purify a stem cell from the tissue, cultivate the stem cell, and conduct the differentiation induction to regenerate the target tissue, and furthermore an organ.

To classify, identify or purify cells, it is necessary to distinguish the different cells according to a certain reference. Common methods of distinguishing cells include the following;
1) Visualized cell classification based on morphology: an examination for a bladder cancer, an urethral cancer and the like by detection of an atypical cell present in urine, and a cancer screening by a classification of the atypical cells in blood or a cytological diagnosis in the tissue can be taken as examples.
2) Cell classification based on the cell surface antigen (marker) stained by the fluorescent specific antibody test: this is to stain a cell surface antigen, generally called as a CD marker, with a fluorescent labeling antibody specific thereto, and used for cancer screenings by a cell purification using a cell sorter, a flow cytometer, or tissue staining. These techniques are frequently used not only in the medical field but also for the cytophysiological study and the industrial use of the cells.
3) Separation of the stem cells using fluorescent pigments taken into cells as reporters: The target stem cell is purified by separating a differentiated target stem cell from roughly separated stem cells and by actually recultivating the differentiated stem cell afterward. That is to say, since an effective marker for the stem cell has not yet been established, the target cell is selected by their differentiated characteristics of cells after their cultivation.

Separating and retrieving a specific cell in a culture fluid in this way is an important technique for biological and medical analyses.

When cells are separated based on a difference in the specific gravity of the cells, the target cells can be purified by the velocity sedimentation method. However, when there is little difference in the specific gravity of the cells enough to differentiate a non-sensitized cell from a sensitized cell, it is necessary to separate the cells one by one based on information from staining with the fluorescent antibody marker or other visual information. This technique may be represented by, for instance, a cell sorter.

The conventional cell sorter employs a technique to drop the fluorescence-stained cells in a charged droplet as isolated in the unit of cell into the air after obtainment of information on the presence of the fluorescence and scattered light of the cell, and applying a high electric field in any direction on the plane perpendicular to the dropping direction in the process of the droplet dropping, whereby the dropping direction of the droplet is controlled by the applied voltage, based on the optical measurement of the presence and localization of the fluorescence in the cell in the droplet and the intensity of the light scattering diffraction, to fractionate and retrieve the droplet in a plurality of containers placed at the bottom (Non-patent document 1: Kamarck, M.E., Methods Enzymol. Vol. 151, p150-165 (1987)).

However, this technique involves the following problems: the system is expensive; the system is large; a high electric field of some thousand volts is required; a large number of samples are required; cells may be damaged during generation of the droplets; the sample cannot be directly observed.

To solve these problems, a cell sorter has been recently developed which generates fine flow paths using the microfabrication technology and sorts the cells flowing through the laminar flow in the flow path while directly observing them under a microscope (Non-patent document 2: Micro Total Analysis, 98, pp. 77-80 (Kluwer Academic Publishers, 1998)), (Non-patent document 3: Analytical Chemistry, 70, pp. 1909-1915 (1998)).

However, since the cell sorter which generates the fine flow paths using the microfabrication technology is slow in the response speed of the sample sorting with respect to the observation unit, another processing method that does not damage the sample and is faster in response is required in order to put the cell sorter into practical use.

In order to solve the problems, the present inventors have filed the applications for a cell analyzer/sorter capable of fractionating the samples based on the fine optical image of the sample and the distribution and localization of the fluorescence in the sample utilizing the microfabrication technology and easily analyzing/sorting the sample cells without damaging the samples retrieved (patent documents 1 to 3). This apparatus is a substantially useful cell sorter for use in a laboratory, but for practical industrial/medical use, new techniques are required for the microfluidic pathway, cell transportation, retrieving method, and sample preparation.
[Non-patent document 1] Kamarck, M.E., Methods Enzymol. Vol. 151, p150-165 (1987)
[Non-patent document 2] Micro Total Analysis, 98, pp. 77-80 (Kluwer Academic Publishers, 1998)
[Non-patent document 3] Analytical Chemistry, 70, pp. 1909-1915 (1998)

[Patent document 1] JP-A-2003-107099
[Patent document 2] JP-A-2004-85323
[Patent document 3] PCT Patent Publication No. WO2004/101731

### SUMMARY OF THE INVENTION

It is an object of the present invention to establish a cell sorting chip and a cell sorting technique for positively detecting and sorting a predetermined cell for the purpose of cell sorting or detection using a micro flow path formed on a substrate, and to provide a cell analyzer/sorter using a chip inexpensive and replaceable for each sample.

When a micro flow path is formed on a substrate and fluid flows therethrough, the fluid flowing therethrough generally becomes a laminar flow. A cell sorter system using a micro flow path formed on a substrate also uses the sheath flow technique to array the cells in line, and the image recognition technique is used to extract the cells and sort a specific cell. While this technique allows for sorting and retrieving the cells with a high degree of precision, the throughput is slower than that of a conventional cell sorter as described above, which does not use a substrate but recognizes and sorts the cells contained in a droplet based on the scattered light and fluorescent light intensity.

Therefore, it is an object of the present invention to develop a sell sorter chip having the throughput of sorting the cells increased as much as that of the conventional cell sorter and to establish a sorting algorism.

The cells assumed in the present invention ranges from a bacteria at the smallest to an animal cell (a cancer cell) at the largest. Therefore, the size (diameter) of the cell ranges approximately from 0.5 micrometers to 30 micrometers φ. To perform the cell sorting using a micro flow path incorporated in a substrate, the first problem is the width of the flow path (cross-sectional dimension). The micro flow path is assumed to be formed in a space of approximately 10 to 100 micrometers in the thickness direction of the substrate substantially in a two-dimensional plane. Based on the size of the cell, the suitable size of the micro flow path will be 5 to 10 micrometers for the bacteria, and 10 to 50 micrometers for the animal cell.

To process all the cells flowing through the micro flow path by image recognition, the throughput depends on the speed of recognizing the image, namely on the frame rate of the camera taking the image in and the speed of sequential image processing of the image taken in. For instance, when a high-speed camera capable of 500 frames/second is used, it is necessary to process one frame of image in less than 1/500 second. Even if there are no more than a few cell images in each frame, a technique of extracting dimensional features with each cell linked between frames is feasible once it is intended. The inventors of the present invention actually realized the processing of 2000 cells/second by developing the high-speed camera capable of 500 frames/second and a dedicated image processing chip.

This numeral value enables processing equivalent substantially to cell sorting processing of 60,000 to 80,000 cells/second (in fact the range of 2000 to 5000 cells/second is most commonly used to secure the purity and recovery rate) by the conventional cell sorter. It is difficult to achieve a further improvement of processing the cells only by the image recognition with the current technology.

Therefore, the present invention provides a step of identifying/sorting cells with scattered light or fluorescent light intensity before cell image recognition. That is to say, a rough sorting is performed in a first step, and a finer cell sorting is performed in a second step. More specifically, the cells are roughly sorted by the scattered light or fluorescent light intensity in the first step. In this step, the rough sorting is performed so that the cells to be collected are not lost even if not all unnecessary cells are removed. Next, the roughly-sorted cells are re-sorted more finely using the image recognition in the second step. The two-step sorting is formed on one chip in a cascaded state.

### BRIEF DESCRIPTION OF THE DRAWINGS

FIG. 1 is a conceptual diagram of a cell sorting system showing the configuration of elemental functions of the cell sorter chip separating the cells in the second step of the embodiment and the devices accompanying each elemental function;
FIG. 2 is a plan view schematically showing an example of the configuration of the cell sorter chip according to the embodiment;
FIG. 3 is a cross-sectional view of a chip substrate 101 viewed in the direction of the arrowhead at the position of A-A crossing the centers of holes 201, 202, and 203 in the region of a reservoir 210;
FIGs. 4A, 4B, and 4C are partial cross-sectional views of the chip substrate 101 focused on the holes 202, 203 and a filter 230 in the region of the reservoir 210 to explain the artifice in the introducing section for the sample cells;
FIG. 5 illustrates the detailed structure in the vicinity of a first cell sorting region 262;
FIG. 6 is a chart explaining the cell distribution in the micro flow path 221 after the confluence as a result of the fact that a buffer fluid flowing down a micro flow path 221 is pushed to the center by the buffer fluid flowing down micro flow paths 224, 224';
FIG. 7 illustrates the detailed structure in the vicinity of a second cell sorting region 320;
FIG. 8 is a diagram explaining a scattered light detecting section in the case where a first cell detecting region 261 obtaining information used for sorting the cells in the first cell sorting region 262 obtains the information of the cell from the forward scattering and the attenuation of the transmitted light;
FIG. 9 is a diagram explaining a side-scattered light detecting section in the case where the first cell detecting region 261 providing information used for sorting the cells in the first cell sorting region 262 obtains the information of the cell from the side-scattered light;
FIG. 10 is a diagram explaining an example of the configuration of an image detecting section where a second cell detecting region 310 providing information used for sorting the cells in the second cell sorting region 320 obtains the cell information in the form of image information;
FIG. 11 is a diagram explaining an example of the configuration of the image detecting section where a second cell detecting region 310 providing information for sorting the cells in the second cell sorting region 320 obtains the cell information in the form of the fluorescent image of the cell; and
FIG. 12 is a diagram explaining an example of the configuration of the optical system performing the cell detection based on the fluorescence intensity of the cells fluorescence-labeled in advarice.

### DESCRIPTION OF THE PREFERRED EMBODIMENTS

### (Embodiment)

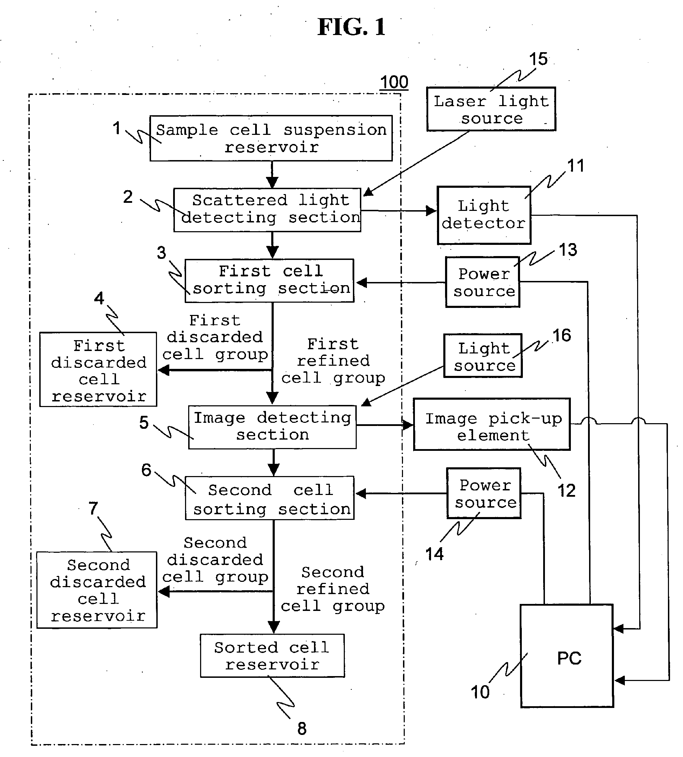

FIG. 1 is a conceptual diagram of a cell sorting system showing the configuration of elemental functions of the cell sorter chip separating the cells in the second step of the embodiment and the devices accompanying each elemental function.

Reference numeral 100 denotes the cell sorter chip. Reference numeral 1 denotes a cell suspension storing section which stores the cell suspension to be sorted. A scattered light detecting section 2 irradiates the cells included in the sell suspension flowing down from the cell suspension storing section 1 with a laser beam using a laser light source 15. A light detector 11 detects the scattered light of the laser light scattered by the cells. Information of the scattered light detected by the light detector 11 is transmitted to a personal computer 10 to compute the size of the cell emitting the scattered light. The cell suspension passed by the scattered light detecting section 2 reaches a first sorting section 3. In the first sorting section 3, when a cell having a forward scattered light intensity equivalent to or less than a certain scattered light intensity (for instance, a cell with the size of approximately 5 µm or less) flows down based on the computed result of the personal computer 10, a power supply 13 is operated by a command from the personal computer 10 to move the cell to a waste reservoir 4 as a cell in a first waste group. On the other hand, the first sorting section 3 lets a cell with higher scattered light intensity (for instance, a cell with the size (diameter) exceeding approximately 5 µm) flow down as it is as a cell in a first refined cell group. The cell suspension corrected from the cells in the first waste group, namely the cell suspension including the target cells in the first refined cell group, reaches an image detecting section 5. In the image detecting section 5, the cell suspension is irradiated with light from a prespecified light source 16, and an image data of the cell obtained by a image processing device 12 is transmitted to the personal computer 10, which evaluates the image parameter. The cell suspension that has passed the image detecting section 5 reaches a second sorting section 6. In the second sorting section 6, when a cell having the result of evaluation by the personal computer 10 is within a prespecified condition (for instance, a cell with the longer diameter and the shorter diameter equivalent to or less than a prespecified value) flow down, a power supply 14 is operated by a command from the personal computer 10 to move the cell to a waste reservoir 7 as a cell in a second waste group. On the other hand, the second sorting section 6 lets a cell under a prespecified condition (for instance, a cell with the longer diameter and the shorter diameter exceeding a prespecified value) flow down as it is as a cell in a second refined cell group and is retrieved into a sorting reservoir 8.

The image parameter to be evaluated by the personal computer 10 is more specifically described below. For the information of the scattered light detected by the light detector 11, a method of determining the cell to be sorted by the parameter depending on the forward scattering depending on the cell size, or a method of determining the cell to be sorted by the parameter of the side-scattering depending on the scattering of minute particles in the cell may be used, or attenuation in the amount of transmitted light through scattering may be simply used. As for the image parameter for the cell obtained by the image processing device 12, a random combination of the long diameter and short diameter of the cell, the area projected on the image, the shape, the permeability, and the distribution of the transparency in the cell can be used as the image parameter.

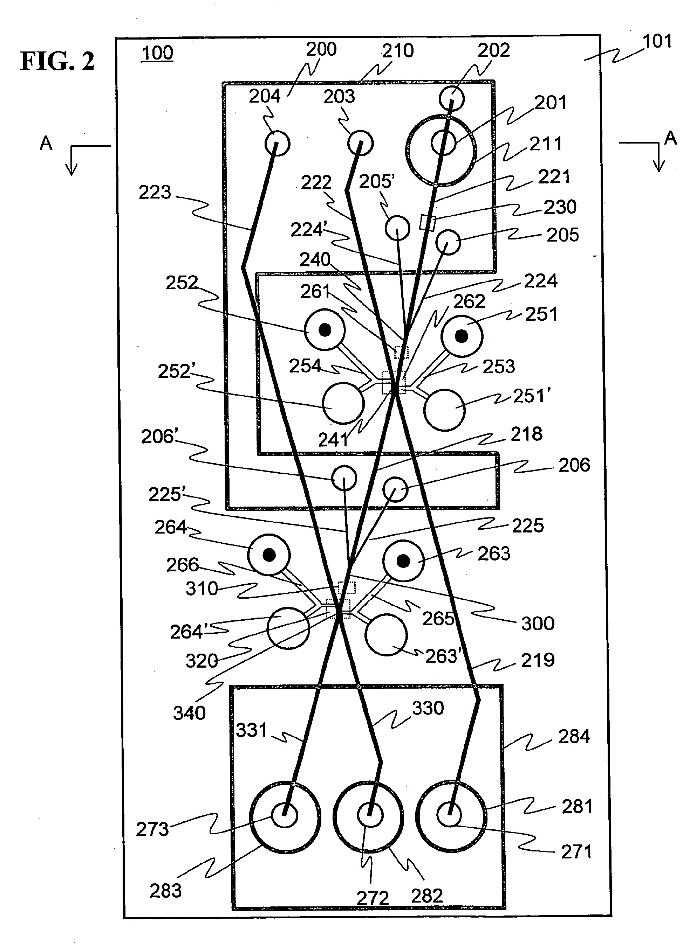

FIG. 2 is a plan view schematically showing an example of the configuration of the cell sorter chip according to the embodiment. The cell sorter chip 100 includes a substrate 101. The substrate 101 is provided with a micro flow path at the bottom plane and an opening on the top plane in communication with the micro flow path. This opening serves as a supply port for the samples or necessary buffer fluid. A reservoir is also provided for supplying a sufficient amount of the buffer fluid and for controlling the flow rate of the buffer fluid in each micro flow path. The micro flow path may be formed by the injection molding, which pours plastics such as PMMA into a mold tool. The general size of the chip substrate 101 is 20 x 40 x 1 mm (t).

In order to make the groove carved in the bottom plane of the chip substrate 101 and the through-hole in the substrate into the form of a micro flow path and a well, respectively, a 0.1-mm-thick laminate film is thermocompression-bonded on the bottom formed with the groove. Cells flowing through the micro flow path can be observed through the 0.1-mm-thick laminate film using an objective lens with 1.4 numerical aperture and x100 magnification. A lens with lower magnification naturally allows for observation without a problem.

The chip substrate 101 is provided on the top surface thereof with a hole 201 for introduction of the sample buffer fluid including the cells into the micro flow path, holes 202, 203, 204, 205, 205', 206 and 206' for introduction of the buffer fluid excluding the cells, and a reservoir 210 including all the holes mentioned above. A wall 211 is provided around the hole 201 used for introduction of the sample buffer fluid including the samples to prevent the sample buffer fluid including the cells from spreading. The wall 211 is lower than the wall of the reservoir 210. The holes 201, 202, 203, 204, 205, 205', 206 and 206' are each in communication with a corresponding one of micro flow paths 221, 222, 223, 224, 224', 225, and 225'. Therefore, when the reservoir 210 is supplied with the sufficient buffer fluid to the level higher than the wall 211, the holes 201, 202, 203, 204, 205, 205', 206 and 206' communicate with one another through the buffer fluid. The buffer fluid also flows into the micro flow paths 221, 222, 223, 224, 224', 225, and 225' each in communication with the corresponding one of these holes.

While more details will be explained later, the sample buffer fluid including the cells introduced into the hole 201 flows down the micro flow path 221, the cells are evaluated with a first parameter in a first cell detecting region 261, and based on the result thereof, the cells are sorted in a first cell sorting region 262. One of the sorted parties flows down a micro flow path 219 into a retrieving hole 271. The other sorted party flows down a micro flow path 218, the cells are evaluated with a 12th parameter in a second cell detecting region 310, and based on the result thereof, the cells are sorted in a second cell sorting region 320. One of the sorted parties flows down a micro flow path 330 into a retrieving hole 272. The other sorted party flows down a micro flow path 331 into a retrieving hole 273. The retrieving holes are each surrounded by a corresponding one of reservoirs 281, 282, and 283 to prevent the sample buffer fluid including the retrieved cells from spreading, and a reservoir 284 including the reservoirs 281, 282 and 283 is further provided. The reservoir 284 is higher than the wall 271 to prevent the sample buffer fluid including the retrieved cells from spreading and walls 282 and 283 described later, and the buffer fluid is filled to the level higher than the walls 281, 282, 283 before the sorting operation. However, this height is assumed to be lower than the level of the buffer fluid filled in the reservoir 210.

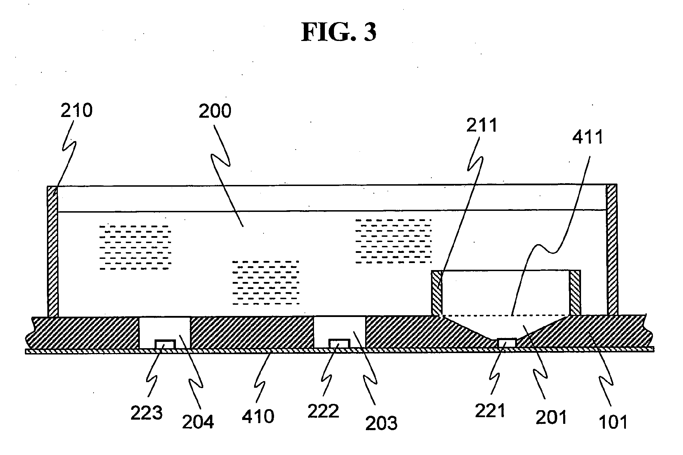

FIG. 3 is a cross-sectional view of the chip substrate 101 viewed in the direction of the arrowhead at the position of A-A crossing the centers of the holes 201, 202, and 203 in the region of the reservoir 210. The grooves carved in the bottom plane of the chip substrate 101 are covered by a laminate film 410 to provide the respective micro flow paths 221, 222 and 223. Similarly, the holes 201, 203, and 204 bored in the chip substrate 101 are covered by the laminate film 410 to provide respective wells open on the top plane of the substrate 101. The holes 201, 203, and 204 communicate with the micro flow paths 221, 222 and 223, respectively. The hole 201 is surrounded by the reservoir 211 provided on the upper surface of the substrate 101 and is formed as a cone-shaped hollow. In addition, a membrane filter 411 is provided on the top plane of the hole 201. This configuration is provided in order to positively introduce the cells in the sample buffer fluid including the cells into the micro flow path 221 and to prevent large dust from flowing into the micro flow path 221. The relationship between the other holes and the micro flow paths are the same although not shown. ,

As shown in FIG. 3, since the reservoir 210 is supplied with a sufficient amount of a buffer fluid 200, the micro flow paths 221, 222, 223, 224, 224', 225, and 225' in communication with the holes 201, 202, 203, 204, 205, 205', 206, and 206', respectively, are supplied with the buffer fluid to the same level. Therefore, an equal hydraulic pressure is applied to the entrance of the hole 201 for introducing the sample buffer fluid including the cells into the micro flow path and the holes 202, 203, 204, 205, 205', 206, and 206' for introducing the buffer fluid excluding the cells into the micro flow path. Accordingly, if having the same width (assuming that they have the same height) or the same cross-sectional area, and the same length, then both micro flow paths will have substantially the same flow rate. For instance, the micro flow paths 224 and 224' associated with the holes 205 and 205', respectively, are supplied with the buffer fluid to the same level to equalize the flow rate of the buffer fluid flowing through the micro flow paths 224 and 224'. Specific examples of dimensions of each section are shown in the description below.

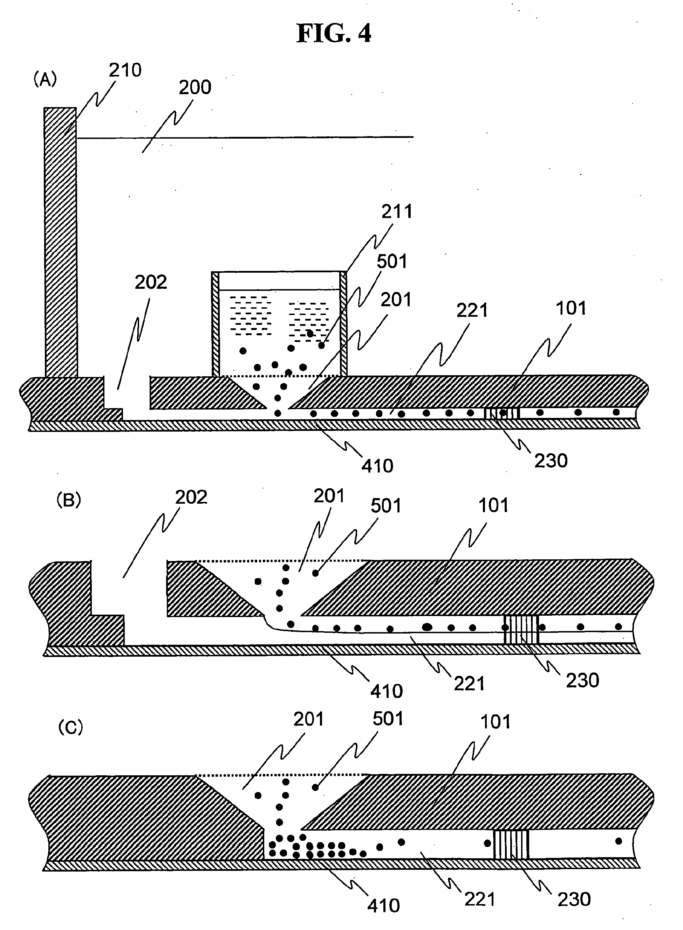

FIGs. 4A, 4B, and 4C are partial cross-sectional views of the chip substrate 101 focused on the holes 202, 201 and a filter 230 in the region of the reservoir 210 to explain the artifice in the introducing section for the sample cells. As shown in FIG. 4A, the micro flow path 221 (20 µm wide, 15 µm deep) is connected to the hole 202 located upstream of the hole 201. Therefore, as shown in FIG. 4B, the buffer fluid including a sample cell 501 introduced into the hole 201 flows down the micro flow path 221 along with the buffer fluid excluding the cells supplied from the hole 202. The flow of the cell solution supplied from the hole 201 and the flow of the buffer fluid supplied from the hole 202 make a laminar flow in locations downstream of the hole 201. Since a layer of the cell solution supplied from the hole 201 is formed on the layer of the flow of the buffer fluid supplied from the hole 202, therefore, the cells flow smoothly down in the micro flow path 221 without any contact with the bottom thereof. The filter 230 incorporated directly in the chip as a fine structure is disposed downstream of the hole 201 in the micro flow path 221 to prevent the micro flow path 221 from clogging. FIG. 4C schematically shows a state in which cells flowing into the flow path 221 from the opening 201 come into contact with the laminate film 410 causing accumulation. When one of the cells contacts the laminate film 410 to stay there, other cells get stuck with the cell to accumulate there one after another, consequently stopping the flow of the cells.

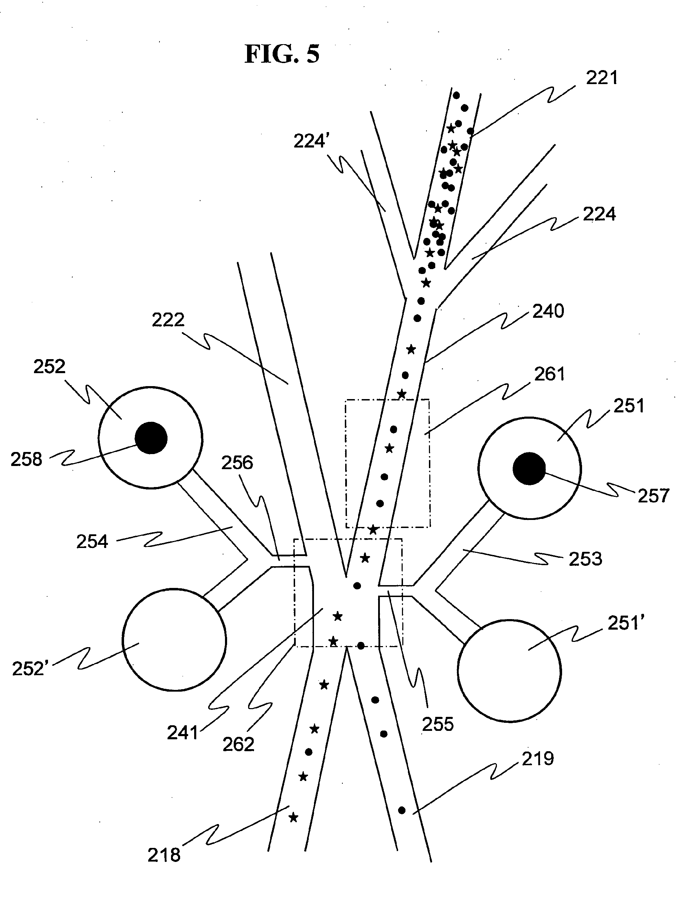

The sample buffer fluid including the cells that has passed through the filter 230 flows down the micro flow path 221 and is gathered with two side flows of sheath buffer excluding cells supplied from the two micro flow paths 224, 224' (12 µm wide, 15 µm deep) connected to two buffer reservoir holes 205, and 205' in upper steams, respectively. A micro flow path (20 µm wide, 15 µm deep) 240 is the confluent pathway of above three pathways, a part of which is also used as the first cell detecting region 261. The reason for placing the first cell detecting region 261 in the micro flow path 240 on which the micro flow path 221 and micro flow paths 224, 224' converge will be described later with reference to FIG. 5.

At the lower reach of the stream from the first cell detection region 261, the micro flow path 240 is gathered with the micro flow path 222 (20 µm wide, 15 µm deep) through which the buffer fluid excluding the cells supplied from the hole 203. Reference numeral 241 denotes a micro flow path (40 µm wide, 15 µm deep) after the confluence of two micro path ways 240 and 222, a part of which is used for the first cell sorting region 262. The confluent micro flow path 241 forks into the micro flow paths 218 (20 µm wide, 15 µm deep) and 219 (20 µm wide, 15 µm deep) at the lower reach of the stream from the first cell sorting region 262. A pair of gel electrodes are in contact with the buffer fluid at the first cell sorting region 262 flowing down the micro flow path 241. When voltage is applied to the gel electrodes, the cells are sorted by a synthetic vector of the electrophoretic force working on cells and a force applied by the buffer fluid flowing through the micro flow path 241. The configuration of the first cell sorting region 262 and the force to sort the cells are also explained with reference to FIG. 5.

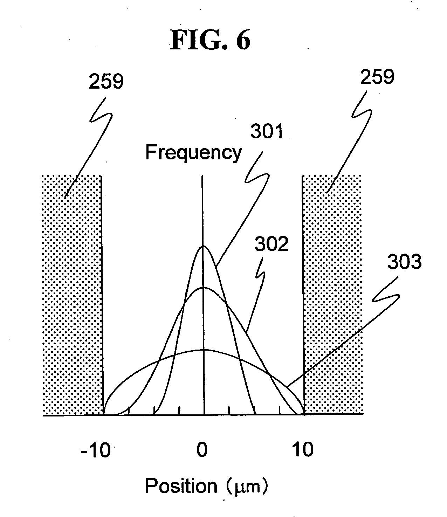

FIG. 5 is a diagram showing the detailed structure in the vicinity of the first cell sorting region 262. Because of the sample buffer fluid flowing down the micro flow path 221 is gathered with two micro flow paths 224 and 224' from both sides, as shown at the top of FIG. 5, cells 501 flowing down jumblingly through the micro flow path 221 are lined up and spaced adequately at the center of the micro flow path 240 after the confluence. The reason for this line-up effect is explained with reference to FIG. 6.

FIG. 6 is a chart showing the cell distribution in the micro flow path 221 after the confluence as a result of the fact that a buffer fluid flowing down the micro flow path 221 is concentrated to the center by the push of two side buffer fluids from micro flow paths 224, 224'. Reference numeral 259 in the chart denotes a side wall of the flow path. More specifically, the chart shows the following state by indicating the location of the micro flow path 221 on the horizontal axis and the frequency of appearance of the cells on the longitudinal axis: the flow of the buffer fluid including the cells flowing down the 20-µm-wide micro flow path 221 is concentrated to the center of the 20-µm-wide micro flow path 221 by the push of two side flows of the buffer fluid flowing down the 12-micrometer wide micro flow paths 224 and 224'. A curve 301 indicates that the cells are distributed in the width of approximately 10 µm at the center of the micro flow path 221 in the following case. That is to say, each buffer fluid flowing down each of the micro flow paths 224 and 224' is roughly half of the volume of the buffer fluid including the cells flowing down the micro flow path 221. In other words, the cross-sectional area of each of the micro flow paths 224 and 224' is roughly half of that of the micro flow path 221. A curve 302 indicates the cell distribution when the width of each of the micro flow paths 224 and 224' is narrower, and a curve 303 indicates the cell distribution when the micro flow paths 224 and 224' are not provided. As obvious from the curve 301, setting a suitable width of the micro flow paths 224 and 224' enables the cells flow substantially away from the wall of the flow path to prevent the cells from reaching the wall.

Returning to FIG. 5, the explanation continues. Since the cells flowing down the micro flow path 221 thus pass in the center of the micro flow path 221 in an orderly manner at the first cell detecting region 261, each cell can be detected enabling to evaluate parameters of the cell more accurately.

At the downstream of the first cell detecting region 261, the micro flow path 222 (20 µm wide, 15 µm deep) joins the micro flow path 240 made by joining the micro flow paths 224 and 224' into the micro flow path 221 from both sides, forming the new confluent micro flow path 241 (40 µm wide, 15 µm deep). The buffer fluid excluding the cells flows into the micro flow path 222 from the hole 203. The micro flow path 240 and the micro flow path 222 are assumed to have the same width and the width of the micro flow path 241 is assumed to be two times wider than the former width; therefore, the buffer fluids flowing down the confluent micro flow path 240 and the micro flow path 222 flow down while substantially keeping the boundary of two layers of each laminar flow in the micro flow path 241. Thus, though the cell distribution curve 301 shown in FIG. 6 tends to slightly expand toward the entrance of the micro flow path 222, there is not so much difference.

From the confluent point of the micro flow path 240 and the micro flow path 222 to the micro flow path 241 after the confluence is used for the first cell sorting region 262. In this region, conjunction sections 255 and 256 are formed in the bottom plane of the substrate 101 as with the micro flow path. The conjunction sections 255, 256 have a liquid junction structure of approximately 15 µm wide (length along the micro flow path), 15 µm deep and 20 µm long filled internally with gel including an electrolyte. In addition, they are connected with the micro flow path 240 and the micro flow path 222 through the walls thereof, respectively, so that the gel including the electrolyte directly comes into contact with the buffer fluid flowing down the micro flow paths. The area of contact between the gel and the buffer fluid flowing down the micro flow path is 15 µm². The conjunction sections 255 and 256 are disposed, as shown in FIG. 5, so that the conjunction section 255 is downstream of the conjunction section 256. The other ends of the conjunction sections 255 and 256 are similarly connected with bending sections of micro structures 253 and 254, respectively, which have 200 µm wide and 15 µm high and are formed on the bottom plane of the substrate 101. The micro structures 253 and 254 are provided at the ends thereof with holes 251, 251' and 252, 252' (2 mm in diameter), respectively, connected to the top plane of the substrate 101. The holes 251, 251' and 252, 252' are used to introduce the gel including the electrolyte therein. The gel is inserted into the holes 251 and 252 until the gel comes out of the holes 251' and 252', whereby the micro structures 253 and 254 on the bottom plane of the substrate 101 and the conjunction sections 255 and 256 of the liquid junction structure are filled with the gel including the electrolyte.

Electrodes 257 and 258 denoted by black circles are connected to the holes 251 and 252, respectively, for introducing the gel and are connected with the power supply 13 explained with reference to FIG. 1. At the right moment when the cells detected in the first cell detecting region 261 flow down between the conjunction sections 255, 256, voltage is applied between the electrodes and thus to the buffer fluid in response to a signal given by the personal computer 10.

As describe above, the conjunction sections 255, 256 where the buffer fluid comes into contact with the gel in the first cell sorting section 262 are configured such that the conjunction section 256 is arranged at the upstream of the conjunction section 255. When positive voltage is applied to the electrode 258 (anode) inserted in the hole 252 and negative voltage to the electrode 257 (cathode) inserted in the hole 251, the cells flowing down the micro flow path 240 can be effectively moved to the micro flow path 218. This is because an electrophoretic force works on a negatively charged cell to move to the positive electrode (anode) 258 when current is applied and a synthetic vector is formed by the vector received from this force and the buffer fluid flowing through the micro flow path and the vector of the electrophoresis. This configuration allows for more effective use of the electric field compared with a configuration forming the liquid junction sections 255 and 256 at the same points relative to the flow of the micro flow path (the opposite position with respect to the flow line), and the cells can move to the micro flow path 218 or the micro flow path 219 under a stable state with lower voltage. A retrieving hole 271 for the cells sorted in the first cell sorting region 262 is disposed downstream of the micro flow path 219. A wall 281 is provided for the hole 271 to prevent the sample buffer fluid including the retrieved cells from spreading.

The explanation continues with reference to FIG. 2 again. The cells moved to the micro flow path 218 in the first cell sorting region 262 flow down to the second cell detecting region 310. In this process, as with the micro flow path 240 described above, the micro flow paths 225 and 225' (12 µm wide, 15 µm deep) which are two bypasses supplying the buffer fluid excluding the cells flowing from the holes 206 and 206', respectively, provided in the reservoir 210 flow into the micro flow path 218. As a result, a micro flow path 300 after the confluence allows the cells to flow in an even more orderly manner as with the micro flow path 240, and is used as the second cell detecting region 310. Further, a cell sorting region 320 is provided downstream of the second cell detecting region 310, where the micro flow path 223 (20 µm wide, 15 µm deep) supplying the buffer fluid excluding the cells flowing from the hole 204 provided in the reservoir 210 joins the micro flow path 300, as in the first cell sorting region 262, to form a micro flow path 340 (40 µm wide, 15 µm deep).

The second cell sorting region 320, similarly to the first cell sorting region 262, divides into the two micro flow paths 330 (20 µm wide, 15 µm deep) and 331 (20 µm wide, 15 µm deep) at the exit of the confluent micro flow path 340. Also here, the second cell sorting region 320 includes conjunction sections 355 and 356 formed in the bottom plane of the substrate 101 as with the micro flow path and having a liquid junction structure of approximately 15 µm wide (length along the micro flow path), 15 µm deep and 20 µm long filled internally with gel including an electrolyte. In addition, the conjunction sections 355 and 356 communicate with the micro flow path 300 and the micro flow path 223 through the walls thereof, respectively. Consequently, the gel including the electrolyte directly comes into contact with the buffer fluid flowing down the micro flow path.

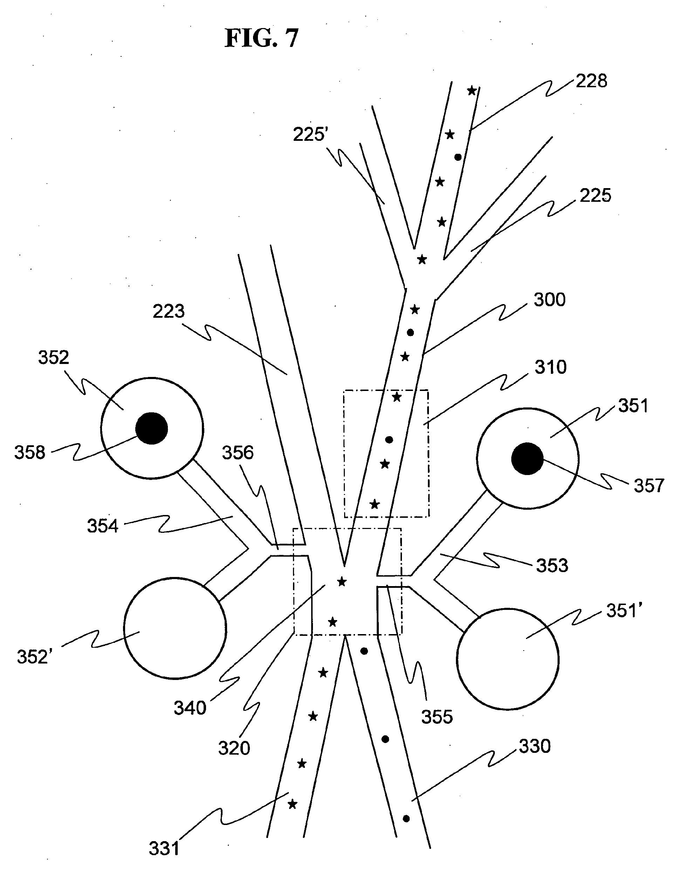

FIG. 7 is a diagram showing the detailed structure in the vicinity of the second cell sorting region 320, which is substantially the same as the structure of the first cell sorting region 262 shown in FIG. 5. Specifically, holes 351, 351' and 352, 352' are used for introduction of the gel including the electrolyte. The gel is inserted into the holes 351 and 352 until the gel comes out of the holes 351' and 352', respectively. Thus, micro structures 353 and 354 on the bottom plane of the substrate 101 and the conjunction sections 355 and 356 of the liquid junction structure are filled with the gel including the electrolyte. The bending sections of micro structures 353 and 354 are the conjunction sections 355 and 356, respectively, having a liquid junction structure of approximately 20 µm long between the micro flow path 300 and the vicinity of the border of the micro flow paths 300 and 223. In the cell sorting region 320, the gel can directly contact the buffer fluid flowing near the micro flow path 340 formed by the micro flow path 340 and the micro flow path 223 flowing into each other. The area of contact between the gel and the buffer fluid is 15 µm (length along the micro flow path) x 15 µm (height). Electrodes 357 and 358 denoted by black circles are inserted into the holes 351 and 352, respectively, for introducing the gel. Voltage is applied to the buffer fluid between the electrodes in response to the signals provided by the personal computer 10 at the right moment when the cells detected in the second cell detecting region 310 flow down between the conjunction sections 355 and 356.

The conjunction sections 355 and 356 where the gel contacts the buffer fluid flowing through the micro flow path 340 in the second cell sorting region 320 is, as in the first cell sorting region 262, configured so that the conjunction section 356 is located upstream of the micro flow path. When positive voltage is applied to the electrode 358 (anode) in the hole 352 and negative voltage to the electrode 357 (cathode) in the hole 351, the cells flowing down the micro flow path 300 can be effectively moved to the micro flow path 331. Specifically, this is because an electrophoretic force works on a negatively charged cell to move to the positive electrode (anode) 358 when current is applied and a synthetic vector is formed by the vector received from this force and the buffer fluid flowing through the micro flow path and the vector of the electrophoresis. This configuration allows for more effective use of the electric field compared with a configuration forming the liquid junction sections 355 and 356 at the same points relative to the flow of the micro flow path (the opposite positions with respect to the flow line). The cells can move to the micro flow path 330 or the micro flow path 331 under a stable state with lower voltage.

In the second cell sorting region 320, the cells in the sample buffer fluid roughly sorted in the first cell sorting region 262 is evaluated in the second cell detecting region 310 by a parameter different from the parameter used in the first cell detecting region 261 and sorted. Therefore, the cells flowing down the micro flow paths 330 and 331 are, as shown in FIG. 7, more strictly sorted.

As explained with reference to FIG. 2, the retrieving holes 272 and 273 for the sorted cells are bored in downstream sections of the micro flow paths 330 and 331, respectively. Walls 282 and 283 are arranged on the circumference of the holes 272 and 273, respectively, to prevent the sample buffer fluid including the retrieved cells from spreading by their heights. Along with the wall 281, the walls 282 and 283 are surrounded by the reservoir 284 including the same. The height of the reservoir 284 is higher than the height of the walls 271, 282, and 283 to prevent the sample buffer fluid including the cells from spreading. The buffer fluid is filled in the reservoir to the level higher than the walls 281, 282 and 283 before operation, but the level is lower than the height of the reservoir 210.

A force for driving fluid flowing in each micro flow path is described below. In the present invention, the cell sorting chip is devised so that fluid can be fed in all of micro flow paths by itself only. In the present invention, fluid flow is fed by a difference of pressures between fluid levels in reservoirs having different heights according to Pascal's law. More specifically, a fluid level in the reservoir 210 is higher than that in the reservoir 284, and this head generates a driving force caused by the difference of pressure for driving a buffer fluid flowing in each micro flow path and also produces a stable flow without pulsing. When a capacity of the reservoir 210 for a buffer fluid is sufficiently large, all of the sample buffer fluid containing cells introduced into the hole 201 can be allowed to flow into the micro flow path 221. All of the fluid fed into the first cell sorting region 262 and into the second cell sorting region 320 is supplied from the reservoir 210, and a driving force for feeding the fluid is generated due to a difference of fluid levels between the reservoir 210 and the reservoir 284. Therefore, the same pressure is loaded to the inlet ports 201, 202, 203, 204, 205, 205', 206, and 206' of the micro flow paths, which enables stable feed of fluid only with the cell sorting chip.

In the embodiment described above, a two-stage cell sorting chip in which the first cell sorting region 262 and the second cell sorting region 320 are serially linked to each other is described, but the chip may have a multilayered structure including three or more stages. In this case, a common reservoir for feeding fluid and also a common reservoir on the fluid recovery side are used to feed fluid, thereby making use of a head of fluid between respective fluid levels on the feed side and on the recovery side, which can realize a stable multi-staged cell sorter chip.

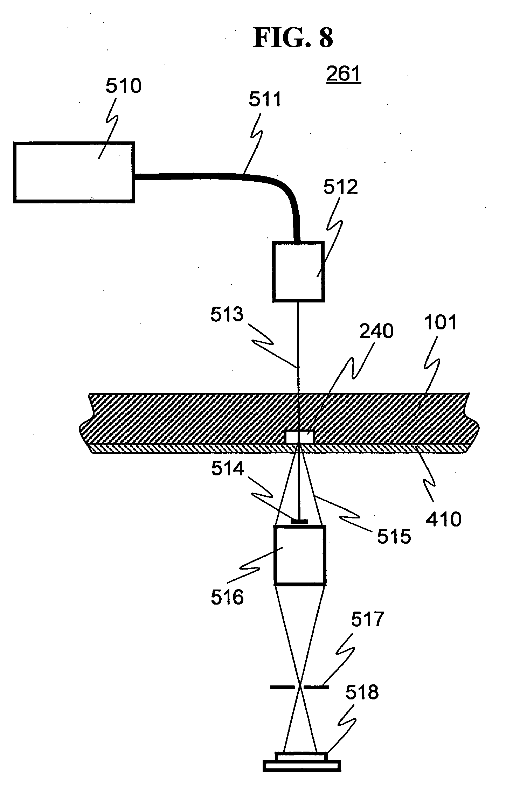

FIG. 8 illustrates operations of a scattered light detecting section when the first cell detecting region 261 acquiring information for sorting cells in the first cell sorting region 262 obtains information by detecting forward scattering of light or attenuation of transmitted light. In FIG. 8, a laser beam emitted from a laser beam source 510 is directed, as a laser beam 513, to a micro flow path 240 in the first cell detecting region 262 from a position above the substrate 101 via a optical fiber 511 and a collimate lens system 512. The substrate 101 and the laminate film 410 can transmit the so-called visible light with a wavelength of 400 nm to 700 nm, and therefore the emitted laser beam 513 is scattered by cells flowing down the micro flow path 240. The laser beam 513 going straight is shuttered by a stopper 514, the scattered light is condensed by a condenser 516, passed through a pinhole 517 with the background light removed, and is then detected by a photodiode 518. The photodiode light detector which measures intensity of scattered light or a ring-formed photodiode array detector which measures an angle of scattered light may be used. The latter is better for measuring a size of each cell, but cell sorting performed in the first stage is for roughly sorting cells, and therefore a low cost photodiode available simply for measurement of intensity of scattered light is used.

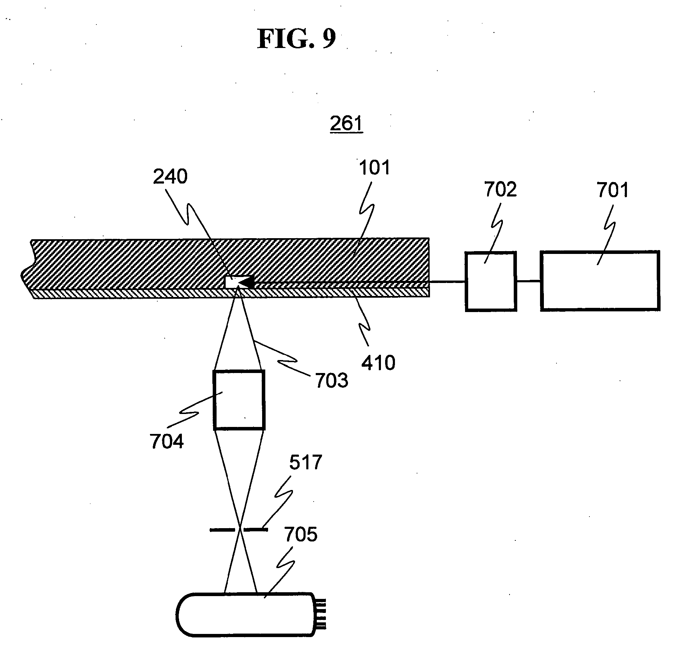

FIG. 9 is a diagram illustrating operations of the sideward scattered light detecting section when the first cell detecting region 261 acquiring information for sorting cells in the first cell sorting region 262 obtains information by detecting sideward scattering of light or attenuation of transmitted light. In this example, a YAG laser emitting a beam with a wavelength of 514 nm or an argon laser emitting a beam with a wavelength of 488 nm can be used. The laser beam is emitted from the rear side of the substrate 101 through a collimate lens 702. The beam goes straight in the substrate 101 and is scattered by cells flowing down the micro flow path 240 in the first cell detecting region 261. The scattered light obtained when no cells flow down the micro flow path 240 is used as a base. When a cell passes through the laser beam, scattered light reaches a photoelectron multiplier 705 via a condenser system 704, and the intensity is measured.

In the sideward scattered light measuring system as described above, smaller size particles can be measured, so that intensity of scattered light changes due to a difference of an internal structure of each cell. Therefore cells can be recognized and sorted according to a parameter different from that employed in measurement with forward scattered light.

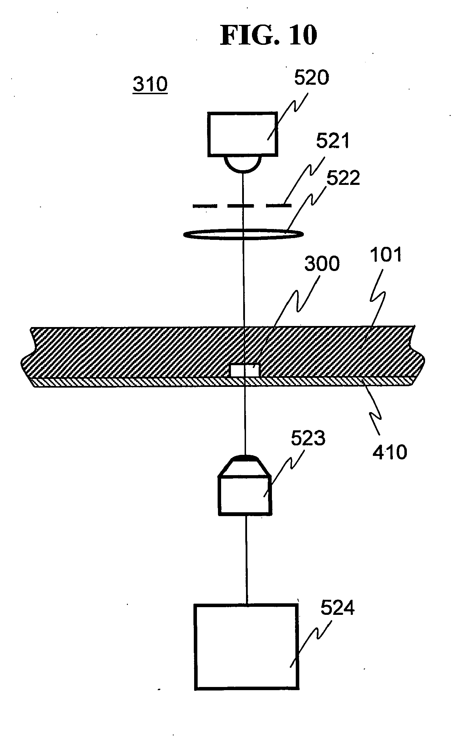

FIG. 10 is a view illustrating an example of configuration of an image detecting section in which the second cell detecting region 310 for providing information for sorting cells in the second cell sorting region 320 acquires cell information as image information. Light from a halogen lamp 520 with a cold mirror is incident onto cells flowing down the micro flow path 300 in the second cell detecting region 310 via a phase contrast ring 521 and a condenser lens 522. The light transmitted a cell is focused by a phase contrast object lens 523 on an image pick-up element of a high-speed camera 524. An image signal obtained by the image pick-up element of the high-speed camera 524 is sent to a personal computer.

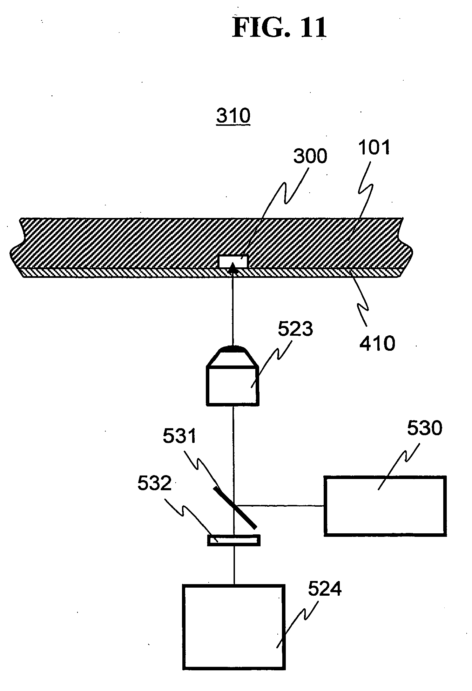

FIG. 11 is a diagram illustrating an example of configuration of an image detecting section in which the second cell detecting region 310 for providing information for sorting cells in the second cell sorting region 320 acquires cell information as a cell luminescence image. In this example, light from a mercury lamp 530 as a light source is converted by a dichroic mirror 531 to light with a wavelength in the excitation light band and is directed to cells flowing down the micro flow path 300 in the second cell detecting region 310 using the phase contrast object lens 523 for causing excitation of luminescence in each cell. The luminescence image emitted from the cell is condensed by the phase contrast object lens 523 and filtered by a filter 532 to obtain only the luminescence component, thereby picking up an image with the high speed camera 524.

Cell sorting in the second cell sorting region 320 is performed according to a cell form as a parameter. The second cell detecting region 310, therefore, treats cells so that classification of cells can be performed with higher precision as compared to that in the first cell detecting region 261, and cannot treat a large quantity of cells. In other words, the number of cells which can be treated in the second cell detecting region 310 depends on a frame rate of a camera and performance of a real time image processing device. However, by using, for instance, a CCD type camera capable of imaging real 500 frames per second as the high speed camera 524 used in the second cell detecting region 310 and also by using a device capable of treating 500 frames per second, it is possible to determine forms of 1000 or more cells per second. This figure is one-tenth less than the number of cells recognized in the first cell detecting region 261 based on scattered light. This means that the cell sorter chip having the two-stage configuration in which cells are roughly sorted in the first stage and are more precisely in the second stage has a greater merit.

A large number of cells can be assessed in both of the cell detection based on the forward scattered light explained with reference to FIG. 1 and the cell detection based on the sideward scattered light explained with reference to FIG. 9 within a short period of time. Therefore, a large number of cells can efficiently be sorted with high precision by applying cell detection based on forward scattered light and cell detection based on sideward scattered light to the first cell detecting region 261 and the second cell detecting region 310 respectively.

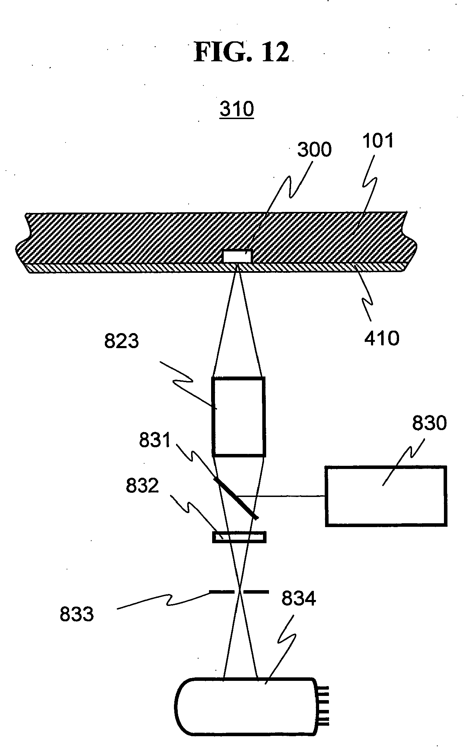

The rough cell sorting in the first stage may be performed not only by the method based on scattered light, but also by the method based on intensity of luminescence. To measure luminescence intensity, as a manner of course it is necessary to label cells with a luminescent material beforehand. Existent examples of labeling cells with a luminescent material include the nuclear staining method using a coloring matter such as DAPI and the cell surface antigen staining method using a luminescent antibody. The optical system shown in FIG. 12 is used to detect the luminescent labels. In this case, light from a laser light source 830 is reflected by a dichroic mirror 831 and the reflected light is directed by a lens 823 onto cells flowing down the micro flow path 300 in the second cell detecting region 310 for exciting luminescence. The luminescence emitted from the cells is condensed by the lens 823 and passed through the dichroic mirror 831 and the filter 832 to obtain only the luminescence component for eliminating astray light, and the luminescence component is detected by a photoelectron multiplier 834. After necessary cells are obtained, cell sorting in the second state is performed, and in this processing step, the image detecting method explained with reference to FIG. 10 in which cell information is obtained as image information or the cell luminescence detecting method explained with reference to FIG. 11 is employed for cell sorting with higher precision.

### (Example of Cell Sorting)

An example in which a mixed suspension of erythrocytes and cardiac cells as a sample is sorted is described below.

Table 1 shows contents of cells obtained in each processing step from a mixture of erythrocytes and cardiac cells as a sample suspension.

**Table 1**

| | | Number of cells(cells/100µ1) | | |
|---|---|---|---|---|
| | | Erythrocytes | Cardiac cells | Miscellaneous cells |
| Sample cell suspension | | 1 × 10 | 1 × 10 | 2.1 × 10 |
| First cell sorting section 3 | Cells sorted in the first stage | 1.2 × 10 | 0.93 × 10 | 0.3 × 10 |
| | Cells discarded in the first stage | 8.7 × 10 | 0.07 × 10 | 2.7 × 10 |
| Second cell sorting section 6 | Cells sorted in the second stage | 0.01 × 10 | 0.78 × 10 | 0 |
| | Cells discarded in the second stage | 1.1 × 10 | 0.11 × 10 | 1.3 × 1 |

The sample suspension contains 1 x 10⁵ erythrocytes/100 µl, 1 x 10³ cardiac cells/100 µl, and 2.1 x 10³ miscellaneous cells (not identified based on the forms or dust)/100 µl, and 50 µl of the suspension was put in the hole 201. The cell detection based on forward scattered light described with reference to FIG. 8 is applied to the first cell detecting region 261 and the cell detection based on image processing described with reference to FIG, 10 or FIG. 11 is applied to the second cell detecting region 310 to perform sorting of cells contained in the sample suspension.

Intensity of scattered light from flat and large-sized erythrocytes is high, while intensity of scattered light from spheric cultured cardiac cells is low, and therefore in the first cell sorting region 3, by setting a threshold value for detection of scattered light in the first cell detecting region 261 so that most cardiac cells can be recovered, cardiac cells can be sorted from a mixture of erythrocytes and cardiac cells. As a result, in the first cell sorting section 3, 1.2 x 10⁴ erythrocytes/100 µl defined as a first refined cell group, 8.7 x 10⁴ erythrocytes/100 µl as a first discard cell group, 0.93 x 10³ cardiac cells/100 µl as a first refined cell group, 0.07 x 10³ cardiac cells/100 µl as a first discarded cell group, 0.3 x 10³ miscellaneous cells/100 µl as a first refined cell group, and 2.7 x 10³ miscellaneous cells/100 µl as a first aborted cell group are obtained. In short, a mixture suspension containing 0.93 x 10³ cardiac cells/100 µl, 1.2 x 10⁴ erythrocytes/100 µl, and 0.3 x 10³ miscellaneous cells/100 µl is obtained, and thus the cardiac cells are condensed.

In the first cell sorting section 3, cells are roughly sorted, so that a large number of erythrocytes is included in the resultant mixture suspension and also other miscellaneous cells are contained in the suspension. A ratio of cardiac cells to erythrocytes is heighten to a value about 8 times higher as compared with the original value, but still 13 times a larger number of erythrocytes remain.

In the second cell sorting section 6, the mixture suspension obtained from the first cell sorting section 3 is subjected to cell sorting by applying cell detection by image processing in the second cell detecting region 310. As a result, 0.01 x 10³ erythrocytes/100 µl as a second refined cell group, 1.1 x 10⁴ erythrocytes/100 µl as a second discarded cell group, 0.78 x 10³ cardiac cells/100 µl as a second refined cell group, 0.11 x 10³ cardiac cells/100 µl as a second aborted cell group, zero miscellaneous cells/100 µl as a second refined cell group, and 1.3 x 10³ miscellaneous cells/100 µl as a second aborted cell group are obtained. In short, contamination of cardiac cell by erythrocytes can be lowered to about 1%.

As described above, with the present invention, it is possible to realize a disposable cell sorting chip capable of efficiently sorting a large number of cells with high precision.

## Claims

1. A cell sorter comprising:
a micro flow path formed on a flat substrate;
a first sorting section which sorts a group of cells contained in a sample buffer fluid flowing down the micro flow path to two groups according to a first parameter; and
a second sorting section which sorts, according to a second parameter, the cell groups sorted in the first sorting section, the first and the second sorting section being provided in a cascade state;
wherein a flow of the sample buffer fluid is caused by a difference between respective levels at two ends of the micro flow path.

2. The cell sorter chip according to claim 1,
wherein the first parameter is based on information concerning scattered light or luminescence from cells obtained by irradiating the cells with light, and the second parameter is an image of a cell.

3. The cell sorter chip according to claim 1,
wherein the first parameter is based on any one of frontward scattered light, sideward scattered light, and luminescence of each cell detected and obtained when light is directed to each cell, and the second parameter is based on any one of frontward scattered light from each cell, sideward scattered light, and luminescence of each cell detected and obtained when light is directed to each cell, said any one being not used for the first parameter.

4. The cell sorter chip according to claim 1,
wherein the first parameter is based on luminescent information of each cell obtained when light is directed to the cell, and the second parameter is based on luminescent image of the cell.

5. A cell sorter chip comprising:
a substrate;
a first micro flow path formed on the substrate to allow a sample buffer fluid containing cells to flow down;
second and third micro flow paths respectively provided on both sides of the first micro flow path to allow buffer fluids containing no cells to flow down in the first micro flow path;
a fourth micro flow path in which buffer fluids in the first, second, and third micro flow paths flow into each other to form one micro flow path;
a first cell detecting region provided in the fourth micro flow path to detect cells flowing down together with the buffer fluid;
a fifth micro flow path for allowing a buffer fluid flowing into the fourth micro flow path to flow down;
a sixth micro flow path formed as a single micro flow path by joining the fourth micro flow path and the fifth micro flow path to allow the buffer fluids to flow down;
a first cell sorting region provided in a portion where the fourth micro flow path and the fifth micro flow path merge into the sixth micro flow path;
seventh and eighth micro flow paths branched from the sixth micro flow path for allowing the cells sorted in the first cell sorting region to flow down;
ninth and tenth micro flow paths respectively provided on both sides of the seventh micro flow path to allow a buffer fluid containing no cells to flow down;
an eleventh micro flow path in which the buffer fluid in the seventh micro flow path and the buffer fluid in the eighth micro flow path flow into each other to form one micro flow path for allowing the buffer fluids to flow down;
a second cell detecting region provided in the eleventh micro flow path to detect cells flowing down together with the buffer fluid;
a twelfth micro flow path for allowing the buffer fluid flowing into the eleventh micro flow path to flow down;
a thirteenth micro flow path formed as a single flow path by joining the eleventh micro flow path and the twelfth micro flow path to allowing the buffer fluids to flow down;
a second cell sorting region provided in a portion where the eleventh micro flow path and the twelfth micro flow path merges into the thirteenth micro flow path; and
fourteenth and fifteenth micro flow paths branched from the thirteenth micro flow path for allowing the cells sorted in the second cell sorting region to flow down;
wherein:
a parameter used to detect cells in the first cell detecting region is different from a parameter used to detect cells in the second cell detecting region;
the first cell sorting region sorts cells according to information provided by the first cell detecting region;
the second cell sorting region sorts cells according to information provided by the second cell detecting region; and
the buffer fluids flowing down in the first to fifteenth micro flow paths are supplied from reservoirs having a common fluid level position.

6. The cell sorter chip according to claim 5,
wherein the parameter used to detect cells in the first cell detecting region is based on information on scattered light or luminescence from each cell obtained when light is directed to the cell, and the parameter used to detect cells in the second cell detecting region is an image of each cell.

7. The cell sorter chip according to claim 5,
wherein a parameter used to detect cells in the first cell detecting region is based on any one of frontward scattered light, sideward scattered light, and luminescence of each cell detected and obtained when light is directed to each cell, and the second parameter is based on any one of frontward scattered light from each cell, sideward scattered light, and luminescence of each cell detected and obtained when light is directed to each cell, said any one being not used for the first parameter.

8. The cell sorter chip according to claim 5,
wherein the parameter used to detect cells in the first cell detecting region is based on information on luminescence from each cell when light is directed to the cell, and the parameter used to detect cells in the second cell detecting region is a luminescent image of each cell.

9. The cell sorter chip according to claim 5,
wherein retrieving holes are provided at downstream ends of the eighth, the fourteenth and the fifteenth micro flow path, respectively, the retrieving holes being each surrounded by an independent wall, and a level of a buffer fluid in the reservoirs is lower as compared with a fluid level of the reservoir having the common fluid level to those of buffer fluids flowing down in the first to fifteenth micro flow paths.

10. A cell sorter chip with gel electrodes according to any of claims 5 to 9,
wherein the first cell sorting region and the second cell sorting region are each provided with opening portions for two gel electrodes comprising electrolyte-contained gel, the opening portions being located on both sides of a micro flow path so as to face each other and at positions offset from each other with respect to the flow of the buffer liquid, and cells passing between the gel electrodes are sorted to two micro flow paths downstream of the cell sorting region according to whether or not a predetermined current is allowed to flow between the two gel electrodes.

11. The cell sorter chip with gel electrodes according to any of claims 5 to 9,
wherein a filter is provided in the first micro flow path so as to prevent a sample buffer fluid from flowing down therein.
